# EUROPÄISCHE PATENTSCHRIFT

(11) **EP 3 966 070 B1**
(45) Veröffentlichungstag und Bekanntmachung des Hinweises auf die Patenterteilung: **01.05.2024**
(21) Anmeldenummer: 20725493.9
(22) Anmeldetag: 08.05.2020
(51) Int. Cl.: B60N 2/225, B60N 2/235, B60N 2/02

(54) **EINSTELLBESCHLAG FÜR EINEN FAHRZEUGSITZ, SOWIE FAHRZEUGSITZ**
ADJUSTMENT FITTING FOR A VEHICLE SEAT AND A VEHICLE SEAT
FERRURE DE RÉGLAGE POUR UN SIÈGE DE VÉHICULE ET SIÈGE DE VÉHICULE

(30) Priorität: 10.05.2019 DE 102019112345
(43) Veröffentlichungstag der Anmeldung: 16.03.2022
(73) Patentinhaber: KEIPER Seating Mechanisms Co., Ltd., Shanghai 201315 (CN)
(72) Erfinder: SCHOLZ, Grit, 42897 Remscheid (DE); SCHUELER, Rolf, 42579 Heiligenhaus (DE); ALBERT REGINOLD, Kirubaharan, 51399 Burscheid (DE); HENKEL, Dieter, 42897 Remscheid (DE); PARAMASIVAM, Balaji, 51379 Leverkusen (DE); ROCK, Arkadius, 42719 Solingen (DE)
(74) Vertreter: Kutzenberger Wolff & Partner
(86) Internationale Anmeldenummer: PCT/EP2020/062897
(87) Internationale Veröffentlichungsnummer: WO 2020/229353

(56) Entgegenhaltungen:
- DE-A1-102011 113 747
- US-A1- 2002 033 627

## Beschreibung

Die Erfindung betrifft einen Einstellbeschlag für einen Fahrzeugsitz, insbesondere zum Einstellen einer Neigung einer Rückenlehne des Fahrzeugsitzes, aufweisend ein erstes Beschlagteil, insbesondere verbindbar mit einem Sitzunterbau des Fahrzeugsitzes, und ein um eine zentrale Drehachse relativ zum ersten Beschlagteil schwenkbares zweites Beschlagteil, insbesondere verbindbar mit der Rückenlehne des Fahrzeugsitzes. Die Erfindung betrifft zudem einen Fahrzeugsitz.

### Stand der Technik

Die DE 103 56 614 A1 offenbart einen Sitz mit einem Sitzteil und mit einer Lehne, wobei die Lehne gegenüber dem Sitzteil von einer ersten Position in eine zweite Position drehbar und gegenüber dem Sitzteil entriegelbar und zumindest in einer der Positionen verriegelbar ist, wobei weiterhin der Sitz einen Motor aufweist und wobei mittels des Motors sowohl das Entriegeln der Lehne gegenüber dem Sitzteil als auch das Drehen der Lehne von der ersten Position in die zweite Position vorgesehen ist.

Die DE 10 2006 020 751 A1 offenbart einen Verstellbeschlag für einen Fahrzeugsitz, wobei der Verstellbeschlag einen ersten Beschlagteil und einen hierzu mittels eines Getriebes um eine Drehachse drehverstellbar vorgesehenen zweiten Beschlagteil aufweist, wobei das Getriebe eine erste Verzahnung am ersten Beschlagteil umfasst und wobei das Getriebe eine exzentrisch zur ersten Verzahnung angeordnete zweite Verzahnung am zweiten Beschlagteil umfasst, wobei zwei Keilsegmente zur Sicherstellung der exzentrischen Anordnung der ersten Verzahnung relativ zur zweiten Verzahnung vorgesehen sind. Die Keilsegmente weisen einen Innenradius und einen Außenradius auf, wobei der Verstellbeschlag ein Bremselement aufweist und wobei das Bremselement in radialer Richtung, ausgehend von der Drehachse, eine Ausdehnung etwa entsprechend des Außenradius der Keilsegmente aufweist.

Aus der DE 10 2007 017 672 A1 ist ein Fahrzeugsitz bekannt, aufweisend ein erstes Sitzteil, ein zweites Sitzteil, das gegenüber dem ersten Sitzteil verstellbar ist, einen Elektromotor zur elektromotorischen Verstellung der beiden Sitzteile relativ zueinander und eine Verriegelungseinrichtung zur Verriegelung der Sitzteile relativ zueinander. Es ist vorgesehen, dass durch eine erste Teilbewegung des Elektromotors die Verriegelungseinrichtung entriegelbar und durch eine nachfolgende zweite Teilbewegung des Elektromotors die Sitzteile relativ zueinander verstellbar sind, der Elektromotor ein am ersten Sitzteil gelagertes Verstellmittel dreht und hierdurch eine Relativverdrehung zwischen dem Verstellmittel und dem Elektromotor erzeugt, in der ersten Teilbewegung des Elektromotors der Elektromotor um die gemeinsame Drehachse geschwenkt wird und hierdurch die Verriegelungseinrichtung entriegelt und in der zweiten Teilbewegung der Elektromotor feststeht und das Verstellmittel das zweite Sitzteil verstellt.

Die DE 10 2009 038 735 A1 offenbart eine Verstelleinrichtung für eine Fahrzeugkomponente, insbesondere für die Rückenlehne eines Fahrzeugsitzes, mit einem ersten Beschlagteil und einem zweiten Beschlagteil, die entlang einer Drehachse angeordnet sind, wobei die relative Lage der beiden Beschlagteile zueinander mittels eines Exzenters veränderbar ist, der ein Drehmoment von einem Antrieb auf das erste Beschlagteil überträgt, so dass dieses an dem zweiten Beschlagteil abrollt und der Exzenter zwei Exzentermittel umfasst, die von einem Mitnehmer, der an dem Antrieb angeordnet ist, antreibbar ist und der Exzenter ein Federmittel umfasst, das zwischen den beiden Exzentermitteln wirkt. Ein Bremsmittel verhindert eine Selbstverstellung der Verstellvorrichtung. Das Bremsmittel wirkt mit einem Vorsprung an dem ersten Beschlagteil zusammen, dessen Mittelachse sich parallel zu der Drehachse der Vorrichtung erstreckt.

Die WO 2012/065721 A1 offenbart eine Verstellvorrichtung für eine Fahrzeugkomponente, mit einem ersten Beschlagteil und einem zweiten Beschlagteil, die entlang einer Drehachse angeordnet sind, wobei die relative Lage der beiden Beschlagteile zueinander mittels eines Exzenters veränderbar ist, der ein Drehmoment von einem Antrieb auf ein Zahnrad überträgt, so dass dieses an dem zweiten Beschlagteil abrollt und der vorzugsweise zwei Exzentermittel umfasst, wobei die Verstellvorrichtung ein Bremsmittel aufweist, das deren Selbstverstellung zumindest weitgehend verhindert, wobei das Bremsmittel mit einer Verriegelungskontur, die an dem Zahnrad vorgesehen ist, zusammenwirkt.

Aus der DE 87 15 063 U1 ist ein Antrieb zum Verstellen eines Glieds bekannt, das zu einem Schließmechanismus eines einer Öffnung in einer Kraftfahrzeugkarosserie zugeordneten Abdeckelements gehört, der Antrieb aufweisend einen drehrichtungsumschaltbaren Antriebsmotor und ein dem Antriebsmotor nachgeordnetes Untersetzungsgetriebe, das über ein Zwischenglied mit dem Riegelelement wirkverbunden ist. Zwischen dem Untersetzungsgetriebe und dem Riegelelement ist eine als Klemmkupplung ausgebildete Kupplung angeordnet, welche eine Freilaufstellung aufweist, in der das Schneckengetriebe ausgekuppelt und somit eine manuelle Verstellung des Riegelelements möglich ist.

Ein weiteres Beschlagsystem für einen Fahrzeugsitz ist aus der DE 10 2011 113 747 A1 bekannt, mit wenigstens einem Beschlag, welcher ein erstes Beschlagteil und ein zweites Beschlagteil aufweist, die miteinander verriegelbar und relativ zueinander um eine Achse verdrehbar sind, einer Übertragungsstange, deren Drehung den Beschlag entriegelt, wenigstens einem Bedienelement, dessen Betätigung die Drehung der Übertragungsstange bewirkt und einem Getriebemodul, welches als eine vormontierte Baueinheit ausgebildet ist.

Aus dem Stand der Technik sind Einstellbeschläge für Fahrzeugsitze, insbesondere Lehneneinsteller, bekannt. Aus dem Stand der Technik bekannte Lehneneinsteller sind für die Einstellung eines Neigungswinkels einer Rückenlehne in einem relativ kleinen Komfort-Einstellbereich um eine Designposition herum entwickelt und optimiert. Ein elektrischer Antrieb kommt aufgrund von bei neu zu entwickelnden Fahrzeugen immer kleiner werdenden Bauräumen, insbesondere zwischen dem Fahrzeugsitz und einer B-Säule und der damit erschwerten Zugänglichkeit eines Handrades zur manuellen Betätigung des Lehneneinstellers, immer häufiger zur Anwendung. Ein elektrischer Antrieb ist für die Einstellung durch den Bediener durch Betätigen eines entsprechenden elektrischen Schalters ausgelegt. Dabei muss die Einstellgeschwindigkeit so gering gehalten werden, dass der Sitzinsasse mit seiner ihm zur Verfügung stehenden Reaktionsgeschwindigkeit in der Lage ist, einen angestrebten Rückenlehnenwinkel einzustellen, ohne den Rückenlehnenwinkel mehrmals korrigierend vor- und zurück zu verstellen.

Angesichts ständig steigender Komfortbedürfnisse werden vermehrt auch Rückenlehnen von Rücksitzanlagen derart elektrifiziert, dass diese zwecks Bereitstellung eines größeren Ladevolumens zusätzlich zu dem Komfort-Einstellbereich komplett nach vorn oder hinten in eine weitgehend horizontale Lage verstellt werden können, vorzugsweise elektrisch per Fernbedienung oder Handy-App und mit deutlich höherer Geschwindigkeit als bei reinen Komforteinstellungen.

Die parallel stattfindende Weiterentwicklung autonom fahrender Fahrzeuge erfordert des Weiteren einen erweiterten Einstellbereich des von einem das Fahrzeug steuernden Insassen genutzten Fahrzeugsitzes, um den Komfort für einen nicht mehr ständig lenkenden Fahrer erhöhen zu können. Dies bedeutet bei gleichzeitig beizubehaltender Insassensicherheit im Falle eines Unfalls, dass ein Sicherheitsgurt komplett mit dem Sitz verfahren werden muss, um auch bei einem weit hinten angeordneten Fahrzeugsitz bzw. einer flach eingestellten Rückenlehne nah an dem Insassen anzuliegen. Derartige Gurtsysteme, deren Schultergurt somit nicht mehr karosseriefest an der B-Säule befestigt ist, sondern im oberen Bereich der Rückenlehne, führen zu signifikant höheren Lasten im Einstellbeschlag und erfordern folglich bei gleichem mechanischen Grundprinzip mehr Bauraum und mehr Gewicht als bei aus dem Stand der Technik bekannte Einstellbeschlägen.

### Aufgabe

Der Erfindung liegt die Aufgabe zu Grunde, einen bauraumoptimierten Einstellbeschlag für hohe Lasten und einen entsprechenden Fahrzeugsitz bereitzustellen.

Aus den zuvor beschriebenen Randbedingungen für eine elektrische Einstellungen eines Neigungswinkels einer Rückenlehne ergeben sich verglichen mit aus dem Stand der Technik bekannten Einstellbeschlägen neue technische Anforderungen. Zum einen führt die Anforderung einer sehr schnellen und gleichzeitig ein exzellentes akustisches Verhalten aufweisenden Einstellfunktion dazu, dass aus dem Stand der Technik bekannte Einstellbeschläge, insbesondere Taumelgetriebe, die systembedingt Drehmomentschwankungen aufweisen, den Anforderungen nicht mehr gerecht werden. Kombiniert mit der gleichzeitigen Anforderung einer deutlich häufigeren Änderung des Rückenlehnenwinkels und einer damit verbundenen, höheren Lebensdaueranforderung kommen ebenso aus dem Stand der Technik bekannte Verzahnungsgeometrien und Lagerkonzepte an physikalisch kaum noch überwindbare Grenzen. Darüber hinaus müssen heutige Taumelgetriebe und deren in Eingriff stehende Verzahnungen nicht nur für den Einstellprozess, sondern gleichzeitig für eine hohe Lastaufnahme im Crashfall ausgelegt sein, was zu erheblichen Kompromissen bei der Entwicklung der Verzahnungsgeometrien führt. Daraus ergibt sich zudem die Aufgabe, einen Einstellbeschlag bereitzustellen, der aufgrund der Gurtintegration gegenüber dem Stand der Technik nochmals deutlich höhere Lasten aufnehmen kann.

### Lösung

Die Aufgabe wird durch einen Einstellbeschlag gemäss Anspruch 1 gelöst.

Dadurch, dass das erste Beschlagteil und das zweite Beschlagteil sowohl Bestandteile einer Getriebeeinheit des Einstellbeschlags als auch einer Verriegelungsvorrichtung des Einstellbeschlags sind, ist der Gesamtaufwand geringer als die Summe der Einzelaufwendungen für die beiden Mechanismen.

Die Getriebeeinheit weist ein Planetengetriebe auf. Die Getriebeeinheit kann ein Planetengetriebe sein. Die Verriegelungsvorrichtung kann eine Rastverriegelung aufweisen. Die Verriegelungsvorrichtung kann eine Rastverriegelung sein. Unter einer Rastverriegelung ist insbesondere eine Verriegelungsvorrichtung aufweisend wenigstens einen in einem Beschlagteil radial beweglich geführten Riegel mit einer Verzahnung und eine Gegenverzahnung in einem weiteren Beschlagteil zu verstehen.

Das erste Beschlagteil wirkt als ein Hohlrad des Planetengetriebes. Das zweite Beschlagteil wirkt als ein Steg des Planetengetriebes. Das Planetengetriebe kann ein Sonnenrad, wenigstens ein Planetenrad, ein Hohlrad und einen Steg aufweisen. Bei Verwendung des Einstellbeschlags in einem Fahrzeugsitz kann der Steg des Planetengetriebes dauerhaft festgesetzt sein, insbesondere indem das zweite Beschlagteil fest mit einem Sitzkissen des Fahrzeugsitzes verbunden ist.

Das erste Beschlagteil kann zudem eine Innenverzahnung der Rastverriegelung aufweisen. Das zweite Beschlagteil kann wenigstens eine Führung für Riegel der Rastverriegelung aufweisen. Alternativ kann das zweite Beschlagteil eine Innenverzahnung der Rastverriegelung aufweisen und das erste Beschlagteil wenigstens eine Führung für Riegel der Rastverriegelung aufweisen.

Das erste Beschlagteil kann eine Innenverzahnung der Getriebeeinheit aufweisen. Das erste Beschlagteil kann eine Innenverzahnung der Verriegelungsvorrichtung aufweisen. Die Innenverzahnung der Getriebeeinheit kann axial neben der Innenverzahnung der Verriegelungsvorrichtung angeordnet sein. Alternativ kann die Innenverzahnung der Getriebeeinheit identisch mit der Innenverzahnung der Verriegelungsvorrichtung sein.

Das zweite Beschlagteil kann wenigstens eine Führung für wenigstens einen Riegel der Rastverriegelung aufweisen. Der wenigstens eine Riegel kann mittels einer Drehung einer Exzenterbaugruppe aus einer Mittelstellung der Exzenterbaugruppe heraus in eine den Einstellbeschlag entriegelnde Position bewegbar sein, und mittels einer gegenläufigen Drehung zurück in die Mittelstellung der Exzenterbaugruppe in eine den Einstellbeschlag verriegelnde Position bewegbar sein.

Der Einstellbeschlag weist vorzugsweise eine Schnittstelle zur Verbindung des Einstellbeschlags mit einem Antrieb auf. Die Schnittstelle kann eine Antriebsbuchse sein. Der Antrieb kann eine Antriebswelle sein oder eine Antriebswelle aufweisen. Die Antriebswelle kann elektromotorisch antreibbar sein. Die Antriebswelle kann mechanisch antreibbar sein. Die Antriebswelle kann mittels eines Handrades antreibbar sein. Die Antriebswelle kann mittels eines Schrittschaltgetriebes antreibbar sein.

Eine Drehung einer Antriebsbuchse aus einer Mittelstellung dieser Antriebsbuchse hinaus kann mittels einer Klemmkupplung eine Drehung der Exzenterbaugruppe bewirken. Die Klemmkupplung kann derart ausgelegt sein, dass nach Drehung der Antriebsbuchse über einen definierten Winkel hinaus, die Klemmkupplung öffnet, so dass die Antriebsbuchse über den definierten Winkel hinaus weiterdrehen kann, ohne dabei die Exzenterbaugruppe zu drehen.

Ein Sonnenrad der Getriebestufe kann mit einem Leerwinkel derart an die Antriebsbuchse gekoppelt sein, dass bei einer Drehung der Antriebsbuchse aus deren Mittelstellung hinaus bis zu einem definierten Drehwinkel der Antriebsbuchse das Sonnenrad unbewegt bleibt, und bei einer Drehung der Antriebsbuchse über den definierten Winkel hinaus das Sonnenrad mitdreht.

Zwischen der Antriebsbuchse und dem Sonnenrad kann eine Getriebestufe angeordnet sein. Die Getriebestufe kann ein Taumelgetriebe sein. Die Getriebestufe kann ein Taumelgetriebe aufweisen.

Die Aufgabe wird zudem gelöst durch einen Fahrzeugsitz mit einem erfindungsgemäßen Einstellbeschlag. Ein solcher Fahrzeugsitz kann hohe Lasten von einer Rückenlehne über den Einstellbeschlag in einen Sitzunterbau ableiten und dennoch, verglichen mit aus dem Stand der Technik bekannten Fahrzeugsitzen, leichter und kostengünstiger sein. Der Fahrzeugsitz kann ein integriertes Gurtsystem aufweisen. Ein erfindungsgemäßer Beschlag ist vorzugsweise auf der Sitzseite angeordnet, auf der auch ein Gurtaustritt eines Gurtbandes des Gurtsystems aus der Rückenlehne erfolgt. Auf der anderen Seite des Fahrzeugsitzes kann ein aus dem Stand der Technik bekanntes Drehlager, ein aus dem Stand der Technik bekannter Beschlag oder ein weiterer erfindungsgemäßer Einstellbeschlag angeordnet sein.

Zusammenfassend und mit anderen Worten ausgedrückt löst die Erfindung insbesondere die Aufgabe, einen Einstellbeschlag bereitzustellen, der sowohl eine exzellente Einstellfunktion als auch eine erhöhte Lastaufnahme bietet. Dazu werden zwei unterschiedliche Wirkprinzipien in einem Einstellbeschlag verwendet, die innerhalb des Einstellbeschlags parallel wirkend jeweils eine der Anforderungen optimal erfüllen. Für die Funktion "häufige, akustisch optimierte Einstellung" haben sich klassische, im Wesentlichen symmetrisch aufgebaute Getriebeeinheiten, insbesondere Planetengetriebe, in vielen Einstellsystemen, auch innerhalb von Fahrzeugsitzen, bewährt. Insbesondere für Einstellfunktionen mit eher moderaten Crashlastanforderungen, wie Sitzkissenneigungseinstellern und dergleichen, werden derartige Planetengetriebe verwendet.

Für die Funktion "hohe Crashlastaufnahme bei geringem Bauraum" hingegen sind aus dem Stand der Technik bekannte Verriegelungsvorrichtungen, insbesondere mit Rastverriegelungen ausgestattete Ratsbeschläge hervorragend geeignet, die mit ihren auf Lastaufnahme optimierten Zahnkränzen, Riegeln und Riegelführungen bei akzeptabler Stufigkeit in vergleichsweise geringem Bauraum und mit geringem Gewicht eine gute Wahl für die Lastaufnahme in Gurtintegralsitzen darstellen.

Die Erfindung kombiniert diese beiden bekannten Wirkprinzipen auf kleinstem Bauraum und lässt für die jeweils vorliegende Funktion während des Gebrauchs den einen und/oder den anderen Mechanismus optimal zur Wirkung kommen, wobei durch geschickte Konzeption und Konstruktion diverse Einzelteile in beiden Mechanismen gleichzeitig verwendet werden und somit der Gesamtaufwand geringer ist, als die Summe der Einzelaufwendungen für die beiden Mechanismen.

### Figuren und Ausführungsformen der Erfindung

Im Folgenden ist die Erfindung anhand von in den Figuren dargestellten vorteilhaften Ausführungsbeispielen näher erläutert. Die Erfindung ist jedoch nicht auf diese Ausführungsbeispiele beschränkt. Es zeigen:
- Fig. 1:: eine perspektivische, transparente Darstellung eines erfindungsgemäßen Einstellbeschlags gemäß eines ersten Ausführungsbeispiels,
- Fig. 2:: eine Explosionsdarstellung von Teilen des Einstellbeschlags aus Fig. 1, wobei nur ein Zahnrad und ein Riegel dargestellt sind,
- Fig. 3:: eine Prinzipskizze eines Getriebebeschlags eines erfindungsgemäßen Einstellbeschlags gemäß eines zweiten Ausführungsbeispiels,
- Fig. 4:: eine Prinzipskizze einer Rastverriegelung des Einstellbeschlags gemäß des zweiten Ausführungsbeispiels,
- Fig. 5:: ein mechanisches Logikelement des Einstellbeschlags gemäß des zweiten Ausführungsbeispiels,
- Fig. 6:: eine Explosionsdarstellung wesentlicher Bauteile eines erfindungsgemäßen Einstellbeschlags gemäß eines dritten Ausführungsbeispiels,
- Fig. 7:: eine Darstellung von Bauteilen eines Getriebebeschlags des Einstellbeschlags aus Fig. 6,
- Fig. 8:: eine Darstellung von Bauteilen einer Rastverriegelung des Einstellbeschlags aus Fig. 6,
- Fig. 9:: eine Darstellung von Bauteilen des Getriebebeschlags, der Rastverriegelung und einer Klemmkupplung des Einstellbeschlags aus Fig. 6,
- Fig. 10:: einen Schnitt entlang der Linie X-X in Fig. 9,
- Fig. 11:: eine Detailansicht aus Fig. 9 auf den Bereich der Klemmkupplung,
- Fig. 12:: eine perspektivische Ansicht auf Bauteile des Getriebebeschlags, der Rastverriegelung und der Klemmkupplung des Einstellbeschlags aus Fig. 6,
- Fig. 13:: eine Explosionsdarstellung wesentlicher Bauteile eines erfindungsgemäßen Einstellbeschlag gemäß eines vierten Ausführungsbeispiels,
- Fig. 14:: eine Darstellung von Bauteilen eines Getriebebeschlags des Einstellbeschlags aus Fig. 13,
- Fig. 15:: eine Darstellung von Bauteilen einer Rastverriegelung des Einstellbeschlags aus Fig. 14,
- Fig. 16:: eine Darstellung von Bauteilen des Getriebebeschlags, der Rastverriegelung und einer Klemmkupplung des Einstellbeschlags aus Fig. 14,
- Fig. 17:: einen Schnitt entlang der Linie XVII-XVII in Fig. 16, und
- Fig. 18:: schematisch einen erfindungsgemäßen Fahrzeugsitz.

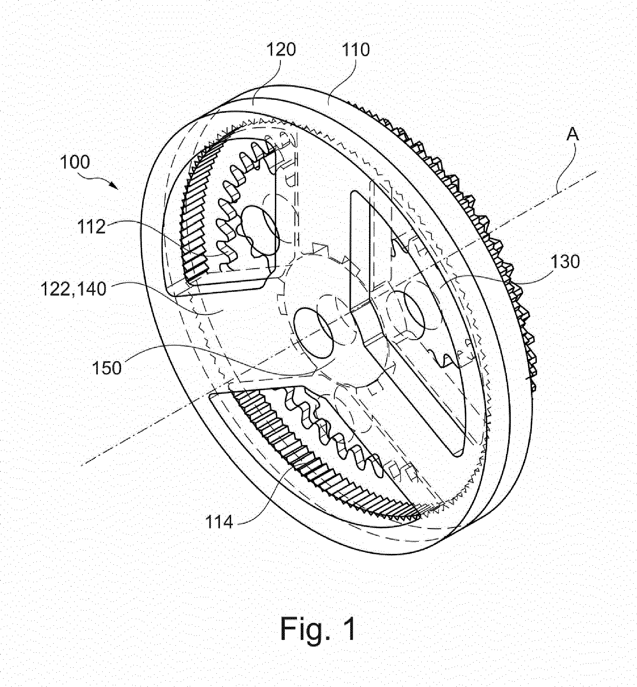

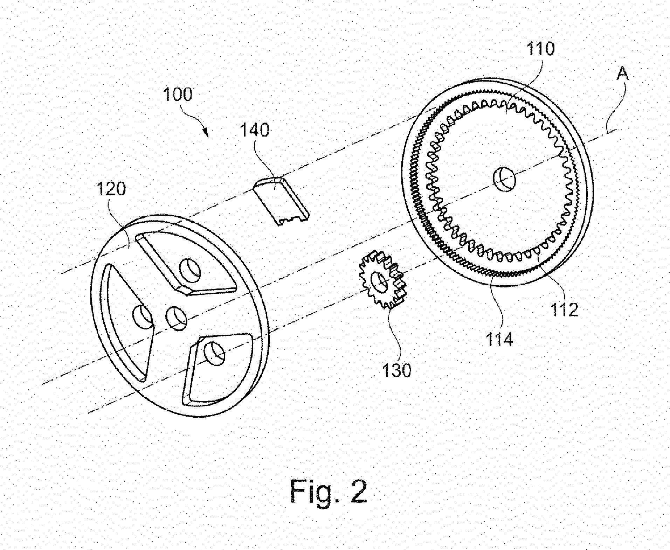

Die Figuren 1 und 2 zeigen einen Einstellbeschlag 100 gemäß eines ersten Ausführungsbeispiels. Der Einstellbeschlag 100 kombiniert einen als ein Planetengetriebe ausgebildeten Getriebebeschlag und eine Rastverriegelung.

Der Einstellbeschlag 100 weist ein erstes Beschlagteil 110, ein zweites Beschlagteil 120, drei Zahnräder 130 und drei Riegel 140 auf. Das erste Beschlagteil 110 und das zweite Beschlagteil 120 sind weitgehend scheibenförmig, wobei das erste Beschlagteil 110 geringfügig topfförmig ausgebildet ist. Das erste Beschlagteil 110 und das zweite Beschlagteil 120 sind radial außen um eine zentrale Drehachse A zueinander drehbar mittels eines in den Figuren nicht dargestellten Umklammerungsrings gelagert. Ein solcher Umklammerungsring ist beispielsweise aus der DE 10 2009 041 492 A1 bekannt. Die Zahnräder 130 und die Riegel 140 sind in einem von den Beschlagteilen 110, 120 gebildeten Aufnahmeraum angeordnet.

Das erste Beschlagteil 110 ist beispielsweise fest mit einem Sitzunterbau 3 eines Fahrzeugsitzes 1 und das zweite Beschlagteil 120 fest mit einer Rückenlehne 5 des Fahrzeugsitzes 1 verbindbar. Das erste Beschlagteil 110 ist alternativ mit einer Rückenlehne eines Fahrzeugsitzes und das zweite Beschlagteil 120 mit dem Sitzunterbau des Fahrzeugsitzes verbindbar.

Sofern nicht abweichend beschrieben beziehen sich die Begriffe radial, axial und in Umfangsrichtung auf die zentrale Drehachse A des Einstellbeschlags 100. Radial bedeutet senkrecht zur zentralen Drehachse A. Axial bedeutet in Richtung oder parallel zur zentralen Drehachse A.

Das erste Beschlagteil 110 weist eine erste Innenverzahnung 112 und eine zweite Innenverzahnung 114 auf. Die erste Innenverzahnung 112 ist axial versetzt zur zweiten Innenverzahnung 114 angeordnet. Die zweite Innenverzahnung 114 ist im Vergleich zur ersten Innenverzahnung 112 vorzugsweise feiner ausgeführt. Die erste Innenverzahnung 112 bildet ein Hohlrad des Planetengetriebes des Getriebebeschlags. Die zweite Innenverzahnung 114 ist ein Bestandteil der Rastverriegelung.

Das zweite Beschlagteil 120 wirkt sowohl als ein Steg des Planetengetriebes als auch als ein Führungsbauteil der Rastverriegelung. Die drei Zahnräder 130 wirken als Planetenräder des Planetengetriebes und sind jeweils auf einem von insgesamt drei Lagerzapfen des als Steg wirkenden zweiten Beschlagteils 120 drehbar gelagert und mit der ersten Innenverzahnung 112 in Zahneingriff. Somit bilden die drei Lagerzapfen drei Drehachsen für jeweils ein Zahnrad 130, wobei diese Drehachsen gleichmäßig verteilt um die zentralen Drehachse A angeordnet sind und parallel zu dieser verlaufen.

Die Lagerzapfen des Steges sind vorliegend um 120 Grad zueinander um die zentrale Drehachse A verteilt angeordnet. Ein um die zentrale Drehachse A drehbar zu den Beschlagteilen 110, 120 gelagertes Sonnenrad ist in den Figuren 1 und 2 nicht dargestellt. Das Sonnenrad ist vorzugsweise ein direkt oder über zusätzliche Bauteile mit einer Ausgangswelle eines ebenfalls nicht in den Figuren 1 und 2 dargestellten Elektromotors, insbesondere Getriebemotors, verbundenes Ritzel. Das als Hohlrad ausgebildete erste Beschlagteil 110, das als Steg ausgebildete zweite Beschlagteil 120, die als Planeten wirkenden Zahnräder 130 und das Sonnenrad bilden das Planetengetriebe.

Das zweite Beschlagteil 120 ist zudem als ein Führungsbauteil der Rastverriegelung ausgebildet. Dazu weist das zweite Beschlagteil 120 drei Führungskanäle 122 für jeweils einen der drei Riegeln 140 auf. Die Riegel 140 sind jeweils, bezogen auf die zentrale Drehachse A, in radialer Richtung in einer zugeordneten Führung 122 beweglich geführt. Die Riegel 140 tragen radial außen jeweils eine Verzahnung 142, die mit der zweiten Innenverzahnung 114 des ersten Beschlagteils 112 in Zahneingriff bringbar ist. Dazu können die Riegel 140 auf an sich bekannte Weise mittels eines um die zentrale Achse A schwenkbaren Exzenters 150 in die zweite Innenverzahnung 114 eingesteuert werden und aus der zweite Innenverzahnung 114 ausgesteuert werden. Der Exzenter 150 kann ein Bestandteil einer Exzenterbaugruppe sein, die eine Steuerscheibe zur gezielten Bewegung der Riegel 140 nach radial innen aufweist.

Wenn die in dem zweiten Beschlagteil 120 geführten Riegel 140 in Zahneingriff mit der zweiten Innenverzahnung 114 des ersten Beschlagteils 110 sind, sind das erste Beschlagteil 110 und das zweite Beschlagteil 120 miteinander derart verriegelt, dass keine Relativdrehung um die zentrale Drehachse A erfolgen kann.

Ein in das Sonnenrad eingeleitetes Drehmoment wird über die Zahnräder 130 zum zweiten Beschlagteil 120 (Steg) weitergeleitet. Das Planetengetriebe des Einstellbeschlags 100 dient der Verstellung der Lehne. Die Zähnezahlen der Verzahnungen dieses Planetengetriebes können für eine Einstellfunktion mit hoher Geschwindigkeit ausgeführt, konstruiert und optimiert werden.

In den Figuren 1 und 2 nicht dargestellte Leer- und Steuerwege, die jeweils zwischen einer Ausgangswelle des Getriebemotors, dem Exzenter 150 der Rastverriegelung und dem Sonnenrad wirken, sind so ausgelegt, dass bei Betätigung des Getriebemotors mit der Bewegung der Ausgangswelle, insbesondere nach geringem Drehspiel, zunächst der Exzenter 150 gedreht wird, wodurch die Riegel 140 radial nach innen aus dem Zahneingriff mit der zweiten Innenverzahnung 114 gezogen werden, so dass das erste Beschlagteil 110 und das zweite Beschlagteil 120 nicht mehr miteinander verriegelt sind. Bei weiterer Drehung der Ausgangswelle kommt ein Teil der Ausgangswelle in Kontakt zu einer Mitnahmegeometrie am Sonnenrad und treibt das Sonnenrad an.

Aufgrund einer zwingend erforderlichen, beidseitigen Antriebsbewegung des Einstellbeschlags 100 und der Anforderung, bei einem Abschalten des Getriebemotors selbsttätig eine spielfrei verspannte Gesamtlage des Einstellbeschlags 100 zu erreichen, ist es vorteilhaft, dass bei Verwendung eines selbsthemmenden Getriebemotors der Getriebemotor nach Beendigung der Drehbewegung wieder in eine "Nulllage" bzw. "Mittelstellung" fährt, um den nächsten Einstellprozess mit beliebiger Richtung wieder wie zuvor beschrieben durchlaufen zu können. Eine entsprechende Ansteuerung kann mittels einer elektrischen Steuerung erfolgen. Grundsätzlich kann der beschriebene Funktionsablauf (das Anfahren der Mittelstellung) aber auch auf rein mechanischem Weg, unter Verwendung von Kupplungseinheiten, Federn, Leerwegen und Freischaltungen zwischen den beteiligten Bauteilen und mit Verwendung eines nicht selbsthemmenden Getriebemotors erfolgen.

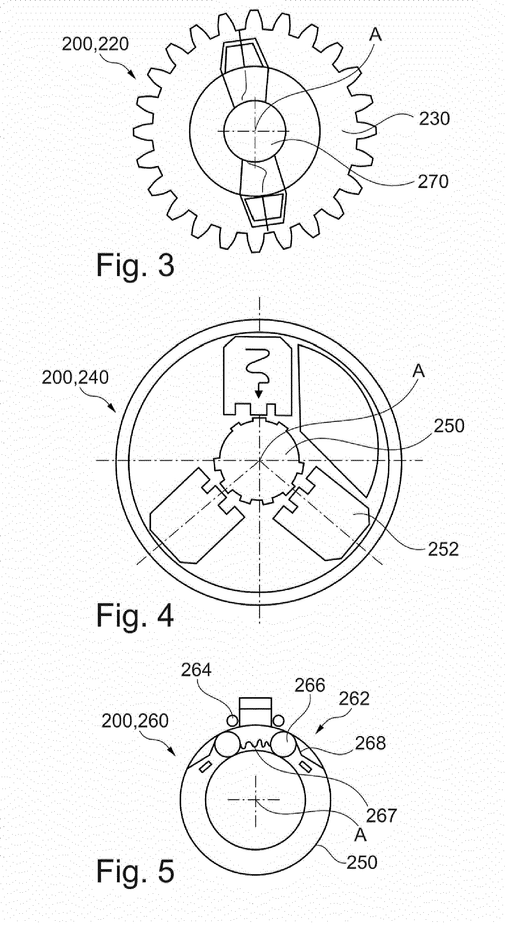

Die Figuren 3, 4 und 5 zeigen stark vereinfacht und symbolisch wesentliche Bauteile eines Einstellbeschlags 200 gemäß eines zweiten Ausführungsbeispiels, nämlich ausschnittsweise Bauteile eines Getriebebeschlags 220 (Figur 3), Bauteile einer Rastverriegelung 240 (Figur 4) und Bauteile eines mechanischen Logikelements 260 (Figur 5). Der Einstellbeschlag 200 entspricht hinsichtlich seines Aufbaus und seiner Funktion dem Einstellbeschlag 100 des ersten Ausführungsbeispiels, soweit nachfolgend nicht abweichend beschrieben.

Das mechanische Logikelement 260 ist vorliegend als ein bidirektional schaltbarer Klemmrollenfreilauf 262 ausgeführt. Das mechanische Logikelement 260 ermöglicht zum Einen ein richtungsabhängiges, insbesondere nach einer Leerwegdurchfahrung erfolgendes, Antreiben eines Exzenters 250 zum radialen Bewegen von Riegeln 252 der Rastverriegelung 240 durch eine, insbesondere nach einer Leerwegdurchfahrung, mit einem Sonnenrad 230 zusammenwirkenden Ausgangswelle 270 eines Getriebemotors, zum Anderen auch eine freie Rückwärtsbewegung des Exzenters 250 durch eine (Nullstellungs-) Feder 264, nachdem der Klemmrollenfreilauf (Innenfläche des Exzenters 250, Zylinderrollen 266, Druckfeder 267, Ansteuerstege 268) den Kraftschluss aufgehoben hat. Der Exzenter 250 kann Bestandteil einer Exzenterbaugruppe sein, die eine Steuerscheibe zur gezielten Bewegung der Riegel 252 nach radial innen aufweist.

In Abwandlungen des zweiten Ausführungsbeispiels kommen weitere mechanische Wirkprinzipien zum Einsatz, wie Schlingfederkupplungen, axial wirkende, geometrisch oder kraftgesteuerte Zahnkupplungen, etc.. Insgesamt ergibt sich eine Vielzahl möglicher Ausführungsvarianten für die Hauptfunktionselemente Getriebe, Rastgesperre und Steuerlogik.

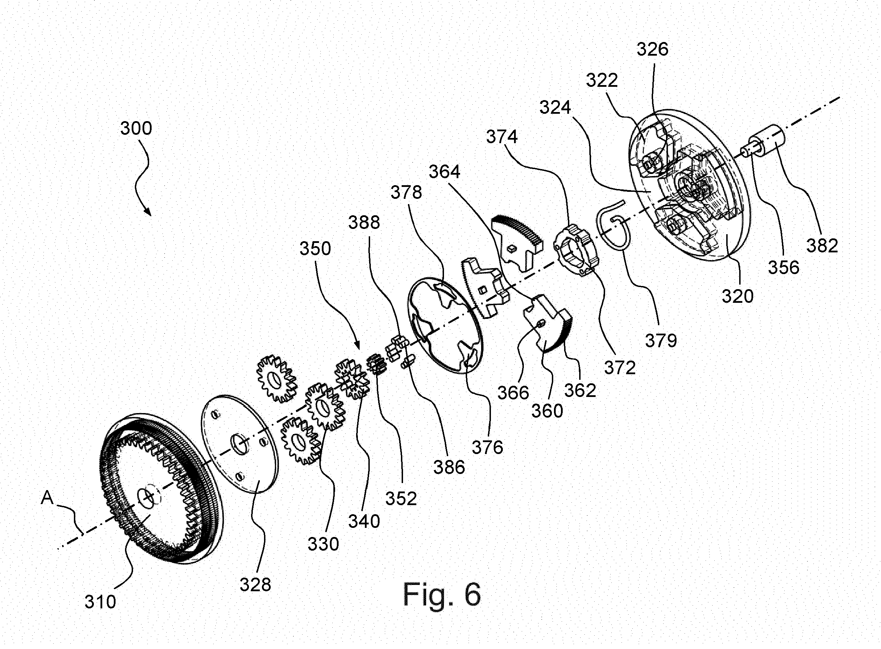

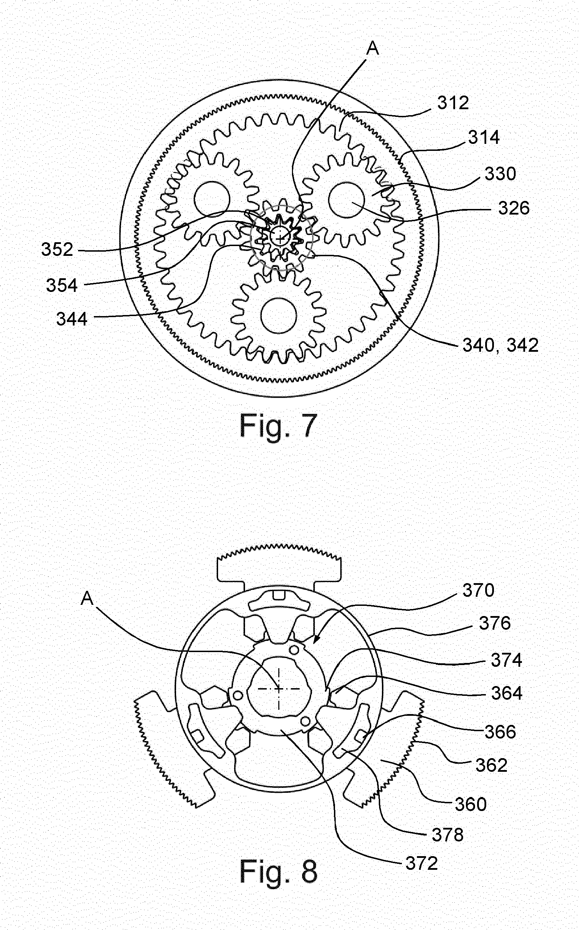

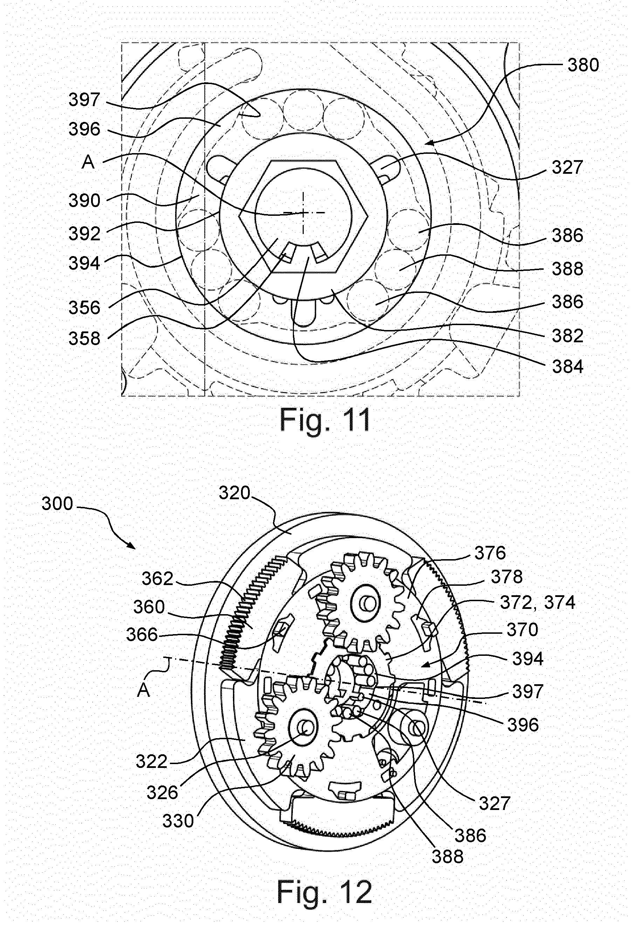

Die Figuren 6 bis 12 zeigen einen Einstellbeschlag 300 gemäß eines dritten Ausführungsbeispiels der Erfindung. Der Einstellbeschlag 300 entspricht hinsichtlich seines Aufbaus und seiner Funktion dem Einstellbeschlag 200 des zweiten Ausführungsbeispiels, soweit nachfolgend nicht abweichend beschrieben.

Der Einstellbeschlag 300 kombiniert einen als ein Planetengetriebe ausgebildeten Getriebebeschlag und eine Rastverriegelung.

Der Einstellbeschlag 300 weist ein erstes Beschlagteil 310, ein zweites Beschlagteil 320, drei Zahnräder 330, ein Sonnenrad 340, eine Getriebestufe 350 zum Antrieb des Sonnenrads 340, drei Riegel 360, eine Exzenterbaugruppe 370, und eine Klemmkupplung 380 auf.

Das erste Beschlagteil 310 und das zweite Beschlagteil 320 sind weitgehend scheibenförmig, wobei das erste Beschlagteil 310 geringfügig topfförmig ausgebildet ist. Das erste Beschlagteil 310 und das zweite Beschlagteil 320 sind um eine zentrale Drehachse A zueinander drehbar. Das erste Beschlagteil 310 und das zweite Beschlagteil 320 sind radial zueinander drehbar mittels eines in den Figuren nicht dargestellten Umklammerungsrings gelagert. Ein solcher Umklammerungsring ist beispielsweise aus der DE 10 2009 041 492 A1 bekannt. Die übrigen Bauteile des Einstellbeschlags 300, insbesondere die Zahnräder 330, das Sonnenrad 340, die Getriebestufe 350, die Riegel 360, die Exzenterbaugruppe 370 und die Klemmkupplung 380 sind weitgehend in einem von den Beschlagteilen 310, 320 gebildeten Aufnahmeraum angeordnet.

Sofern nicht abweichend beschrieben beziehen sich die Begriffe radial, axial und in Umfangsrichtung auf die zentrale Drehachse A des Einstellbeschlags 300. Radial bedeutet senkrecht zur zentralen Drehachse A. Axial bedeutet in Richtung oder parallel zur zentralen Drehachse A.

Das erste Beschlagteil 310 weist eine erste Innenverzahnung 312 und eine zweite Innenverzahnung 314 auf. Die erste Innenverzahnung 312 ist axial versetzt zur zweiten Innenverzahnung 314 angeordnet. Die zweite Innenverzahnung 314 ist axial näher an dem zweiten Beschlag 320 angeordnet als die erste Innenverzahnung. Die zweite Innenverzahnung 314 ist im Vergleich zur ersten Innenverzahnung 312 vorzugsweise feiner ausgeführt. Die erste Innenverzahnung 312 bildet ein Hohlrad des Planetengetriebes des Einstellbeschlags 300. Die zweite Innenverzahnung 314 ist ein Bestandteil der Rastverriegelung des Einstellbeschlags 300

Das zweite Beschlagteil 320 wirkt sowohl als ein Steg des Planetengetriebes als auch als ein Führungsbauteil der Rastverriegelung. Zur Führung der Riegel 360 radialer Richtung weist das zweite Beschlagteil 320 drei gleichmäßig über den Umfang verteilt angeordnete Führungssegmente 322 auf. Jeweils ein Riegel 360 ist in jeweils einer Führung 324, gebildet aus jeweils zwei Führungssegmenten 322, geführt.

Die drei Zahnräder 330 wirken als Planetenräder des Planetengetriebes und sind jeweils auf einem von insgesamt drei Lagerzapfen 326 des als Steg wirkenden zweiten Beschlagteils 320 drehbar gelagert und mit der ersten Innenverzahnung 312 permanent in Zahneingriff. Die drei Lagerzapfen 326 bilden drei weitere, parallel zur zentrale Drehachse A ausgerichtete Drehachsen für jeweils ein Zahnrad 330. Die Lagerzapfen 326 des Steges sind vorliegend um 120 Grad zueinander um die zentrale Drehachse A verteilt angeordnet.

Auf die Endbereiche der drei Lagerzapfen 326 ist ein drei Löcher aufweisendes Schließblech 328 aufgeschoben. Die Endbereiche der drei Lagerzapfen 326 sind in den drei Löchern angeordnet. Das Schließblech 328 sichert die Zahnräder 330 in axialer Richtung und ist radial im Beschlagteil 310 drehbar gelagert. Vorzugsweise sind die Endbereiche der Lagerzapfen 326 derart gestaucht, dass das Schließblech 328 reibkraftschlüssig auf den Lagerzapfen 326 gehalten ist.

Das zu den beiden Beschlagteilen 310, 320 um die zentrale Drehachse A drehbar gelagerte Sonnenrad 340 weist eine Außenverzahnung 342 und eine Innenverzahnung 344 auf. Die Außenverzahnung 342 des Sonnenrads 340 ist mit den Zahnrädern 330 in Zahneingriff. Das sich drehende Sonnenrad 340 treibt somit über die Zahnräder 330 das zweite Beschlagteil 320 an. Das als Hohlrad ausgebildete erste Beschlagteil 310, das als Steg ausgebildete zweite Beschlagteil 320, die als Planeten wirkenden Zahnräder 330 und das Sonnenrad 340 bilden das Planetengetriebe.

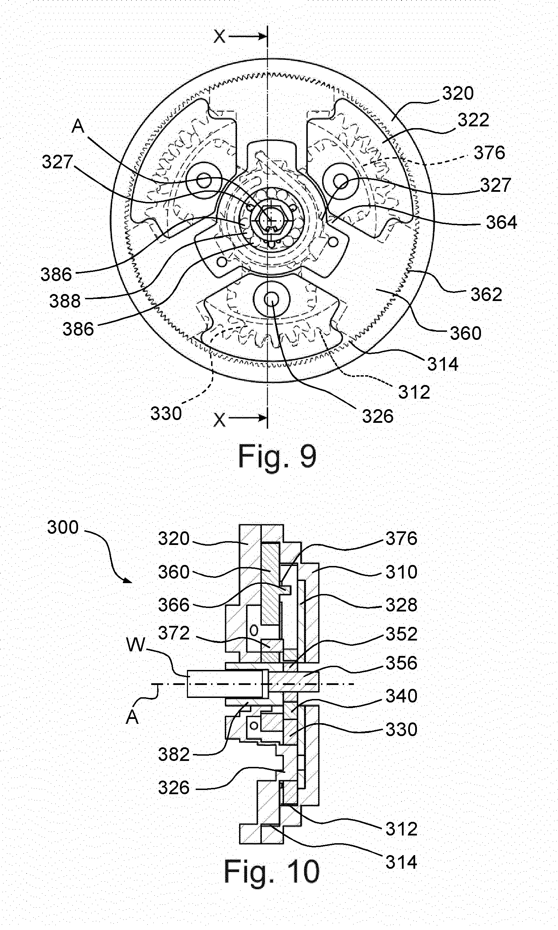

Das Sonnenrad 340 ist über die Getriebestufe 350 antreibbar, wobei das Sonnenrad 340 selbst Bestandteil der Getriebestufe 350 ist. Die Getriebestufe 350 ist mittels einer ausschließlich in Fig. 10 dargestellten Antriebswelle W antreibbar, die um die zentrale Drehachse A drehend antreibbar ist, aber nicht zur Baugruppe des Einstellbeschlags 300 gehören muss. Vorzugsweise ist die Antriebswelle W antreibbar mittels eines in den Figuren nicht dargestellten Elektromotors, insbesondere eine Getriebemotors.

Die Getriebestufe 350 weist ein exzentrisch zur zentralen Drehachse A gelagertes Stirnzahnrad 352 mit einer mittigen kreisrunden Öffnung 354 auf. Eine Zähnezahl des Stirnzahnrads 352 ist um wenigstens einen Zahn kleiner als eine Zähnezahl der Innenverzahnung 344 des Sonnenrads 340. Das Stirnzahnrad 352 ist mit der Innenverzahnung 344 des Sonnenrads 340 in Zahneingriff. In der Öffnung 354 des Stirnzahnrads 352 ist ein Exzenterwelle 356 angeordnet, die von der Antriebswelle W mit einer Exzentrizität um die zentralen Drehachse A taumelnd antreibbar ist. Dazu ist die Exzenterwelle 356 exzentrisch zu der zentralen Drehachse A gelagert. Die Exzenterwelle 356 ist in einer mit der zentralen Drehachse A fluchtend in dem zweiten Beschlagteil 310 gelagerten Antriebsbuchse 382 gelagert.

In einer Mittelstellung der Antriebsbuchse 382, in der die Rastverriegelung verriegelt ist, ist die Antriebsbuchse 382 in beide Drehrichtungen zunächst im Bereich jeweils eines Leerwinkels begrenzt drehbar, bevor die Antriebsbuchse 382 die Exzenterwelle 356 dreht. In beiden Drehrichtungen ist die Exzenterwelle 356 nach Durchlaufen des jeweiligen Leerwinkels aus der Mittelstellung heraus auf Mitnahme mit der Antriebsbuchse 382 gekoppelt. Zur Erzeugung des Leerwinkels greift ein Mitnehmerzapfen 384 der Antriebsbuchse 382 mit einem den Leerwinkeln entsprechenden Spiel in eine Nut 358 der Exzenterwelle 356.

Die Antriebsbuchse 382 ist vorliegend drehfest mit der Antriebswelle W verbindbar, insbesondere über eine Steckverzahnung. Die sich um die zentralen Drehachse A drehende Antriebsbuchse 382 bewirkt nach Durchlaufen des Leerwinkels über die um die zentralen Drehachse A taumelnde Exzenterwelle 356 einen Antrieb des Sonnenrads 340 mit einer dem Zähnezahlverhältnis des Taumelgetriebes entsprechenden Untersetzung.

Die Riegel 360 sind jeweils, bezogen auf die zentrale Drehachse A, in radialer Richtung in der jeweils zugeordneten Führung 324 beweglich geführt. Die Riegel 360 tragen radial außen jeweils eine Verzahnung 362, die mit der zweiten Innenverzahnung 314 des ersten Beschlagteils 310 in Zahneingriff bringbar ist. Dazu können die Riegel 360 mittels der Exzenterbaugruppe 370 in die zweite Innenverzahnung 314 eingesteuert werden und aus der zweite Innenverzahnung 314 ausgesteuert werden. Wenn die in dem zweiten Beschlagteil 320 geführten Riegel 360 in Zahneingriff mit der zweiten Innenverzahnung 314 des ersten Beschlagteils 310 sind, sind das erste Beschlagteil 310 und das zweite Beschlagteil 320 miteinander derart verriegelt, dass keine Relativdrehung um die zentrale Drehachse A erfolgen kann.

Die Exzenterbaugruppe 370 umfasst einen Exzenter 372 mit radial abstehenden Exzenternocken 374 und eine drehfest, vorliegend über Nasen, mit dem Exzenter 372 verbundene Steuerscheibe 376. Die Steuerscheibe weist drei Steuerkulissen 378 zur gezielten Bewegung der Riegel 360 auf. Die Riegel 360 weisen jeweils eine Steuernase 366 auf, die in jeweils eine Steuerkulisse 378 der Steuerscheibe 376 eingreift.

Die Riegel 360 weisen radial innen komplementär zu den Exzenternocken 374 ausgebildete Nocken 364 auf, die von den Exzenternocken 374 abstützbar sind. In einer Mittellage des Exzenters 372 stützen die Exzenternocken 374 des Exzenters 372 die Riegel 360 derart radial ab, dass die Verzahnung 362 der Riegel 360 in Eingriff mit der zweiten Innenverzahnung 314 gehalten ist. Ist der Exzenter 372 außerhalb seiner Mittellage, sind die Nocken 364 nicht durch die Exzenternocken 374 abgestützt.

Durch Drehung der Exzenterbaugruppe 370 um die zentrale Drehachse A dreht der Exzenter 372 aus seiner Mittellage heraus, wodurch die Exzenternocken 374 unter den Nocken 364 der Riegel 360 wegdrehen, so dass die Riegel 360 radial nach innen und somit aus der zweiten Innenverzahnung 314 des ersten Beschlagteils 310 bewegbar sind. Dazu ist die Steuerkulisse 378 derart geformt, dass die Steuernasen 366 der Riegel 360 mittels der Steuerkulissen 378 entsprechend nach radial innen gezogen werden. Die Exzenterbaugruppe 370 ist mittels einer Feder 379 aus beiden Drehrichtungen in die eine Mittelstellung der Exzenterbaugruppe 370 vorgespannt. Bei Zurückdrehen des Exzenters 372 in die Mittelstellung der Exzenterbaugruppe 370 geben die Steuerkulissen 378 eine Bewegung der Steuernasen 366 der Riegel 360 nach radial außen frei. Zudem bewegen die Exzenternocken 374 die Riegel 360 nach radial außen in Zahneingriff mit der zweiten Innenverzahnung 314 des ersten Beschlagteils 310. Die nun vorliegende Drehwinkelstellung der Antriebsbuchse 382 ist deren neue Mittelstellung für den nächsten Einstellvorgang des Einstellbeschlags 300. In einer Abwandlung des Ausführungsbeispiels können die Riegel 360 alternativ auch durch einzelne Federelemente nach außen bewegt werden.

Die Klemmkupplung 380 bewirkt, dass bei einer Drehung der Antriebsbuchse 382 zunächst die Exzenterbaugruppe 370 gedreht wird, wodurch die Riegel 360 radial nach innen aus dem Zahneingriff mit der zweiten Innenverzahnung 314 gezogen werden, so dass das erste Beschlagteil 310 und das zweite Beschlagteil 320 nicht mehr miteinander verriegelt sind. Bei weiterer Drehung der Antriebsbuchse 382 dreht nach einem Durchlaufen des Leerwinkels zwischen der Antriebsbuchse 382 und der Exzenterwelle 356 der Mitnehmerzapfen 384 die Exzenterwelle 356 und treibt, wie zuvor beschrieben, die Getriebestufe 350 und somit das Sonnenrad 340 an.

Die Klemmkupplung 380 weist sechs als Klemmrollen 386 ausgeführte Klemmkörper und drei als Gummifedern 388 ausgeführt Kraftspeicher auf, die in einem Ringkanal 390 angeordnet sind. Eine radial innere Ringkanalwand 392 ist durch eine Außenumfangsfläche der Antriebsbuchse 382 begrenzt. Die radial innere Ringkanalwand 392 ist kreiszylindrisch. Eine radial äußere Ringkanalwand 394 ist durch eine Öffnung in dem Exzenter 372 gebildet. Die radial äußere Ringkanalwand 394 hat drei kreiszylindrische Abschnitte, zwischen denen in Umfangsrichtung jeweils einer von insgesamt drei Klemmwulsten 396 angeordnet sind. Die Klemmwulste 396 weisen in Richtung der radial inneren Ringkanalwand 392 und weisen in Umfangsrichtung betrachtet jeweils beidseitig eine schrägen Anlauffläche 397 für jeweils eine der Klemmrollen 386 auf.

Der Ringkanal 390 weist im Bereich der kreiszylindrischen Abschnitte der radial äußeren Ringkanalwand 390 in radialer Richtung eine Breite auf, die geringfügig größer ist als ein Durchmesser der Klemmrollen 386. Im Bereich der Anlaufflächen 397 weist der Ringkanal 390 in radialer Richtung eine Breite auf, die kleiner ist als ein Durchmesser der Klemmrollen 386.

Jeweils zwei Klemmrollen 386 bilden ein Klemmrollenpaar und sind zwischen zwei Anlaufschrägen 397 benachbarter Klemmwulste 396 angeordnet. Die Klemmkupplung 380 weist drei gleichwirkende Klemmrollenpaare auf, von denen nachfolgend nur ein Klemmrollenpaar beschrieben ist.

Zwischen den beiden Klemmrollen 386 des Klemmrollenpaars ist jeweils eine der Gummifedern 388 angeordnet. Die Gummifedern 388 spanen in einem unbetätigten Zustand des Einstellbeschlags 300 die beiden Klemmrollen 386 voneinander weg gegen eine zugeordnete Anlaufschräge 397. Je nach Drehrichtung der Antriebsbuchse 382 (der radial inneren Ringkanalwand 392) wird eine der beiden Klemmrollen 386 zwischen eine Anlaufschräge 397 und die radial inneren Ringkanalwand 392 geklemmt, so dass die radial inneren Ringkanalwand 392 reibkraftschlüssig mit der radial äußeren Ringkanalwand 394 verbunden ist. Dadurch bewirkt eine Drehbewegung der Antriebsbuchse 382 zunächst eine Drehung der Exzenterbaugruppe 372, so dass die Riegel 360 radial nach innen in eine entriegelte Position gezogen werden. Die Klemmrollen 386 und die Ringkanalwände 394 drehen dabei relativ zu den Beschlagteilen 310, 320.

Das zweite Beschlagteil 320 weist drei Entsperrnocken 327 auf, von denen jeweils ein Entsperrnocken 327 zwischen zwei Klemmrollen 386 benachbarter Klemmrollen greift. In einem unbetätigten Zustand des Einstellbeschlags 300 ist jeweils ein Entsperrnocken 327 mittig zwischen den beiden Klemmrollen 386 angeordnet. Die Entsperrnocken 327 haben jeweils einen Abstand zu den Klemmrollen 386.

Bei einer Drehbewegung der Antriebsbuchse 382 dreht die Exzenterbaugruppe 372 solange mit, bis die Klemmrollen 386 an die Entsperrnocken 327 des zweiten Beschlagteils 320 anlaufen. Durch das Anlaufen der Klemmrollen 386 an die Entsperrnocken 327 werden die Klemmrollen 386 unter weiterer Vorspannung der Gummifedern 388 von den zugeordneten Anlaufschrägen 397 gedrückt, wodurch die Mitnahme der Exzenterbaugruppe 372 unterbrochen ist.

Im weiteren Verlauf Drehbewegung der Antriebsbuchse 382 gelangt nun der Mitnehmerzapfen 384 der sich drehenden Antriebsbuchse 382 in Anlage an eine die Nut 358 der Exzenterwelle 356 begrenzende Wand, wodurch die Exzenterwelle 356 mitgedreht wird und das Planetengetriebe antreibt. Sobald der Antrieb der Antriebsbuchse 382 beendet ist, dreht die Feder 379 die Exzenterbaugruppe 370 wieder in deren Mittelstellung, so dass der Einstellbeschlag 300 erneut verriegelt.

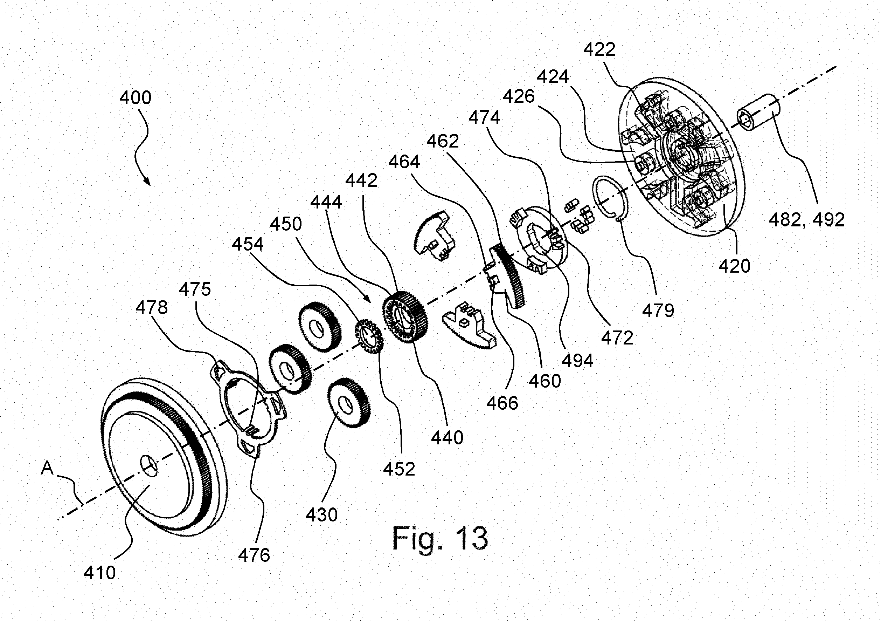

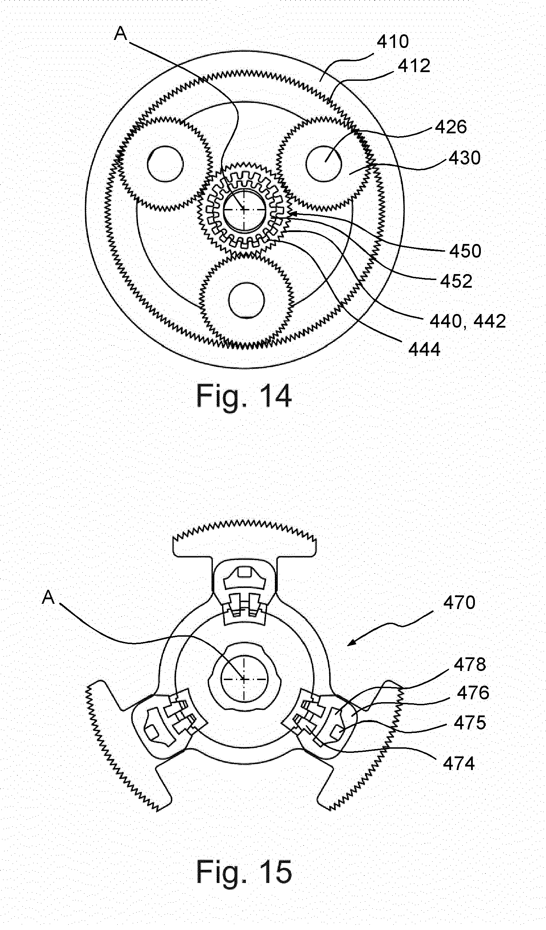

Die Figuren 13 bis 17 zeigen einen Einstellbeschlag 400 gemäß eines dritten Ausführungsbeispiels der Erfindung. Der Einstellbeschlag 400 entspricht hinsichtlich seines Aufbaus und seiner Funktion dem Einstellbeschlag 300 des dritten Ausführungsbeispiels, soweit nachfolgend nicht abweichend beschrieben.

Der Einstellbeschlag 400 kombiniert einen als ein Planetengetriebe ausgebildeten Getriebebeschlag und eine Rastverriegelung.

Der Einstellbeschlag 400 weist ein erstes Beschlagteil 410, ein zweites Beschlagteil 420, drei Zahnräder 430, ein Sonnenrad 440, eine Getriebestufe 450 zum Antrieb des Sonnenrads 440, drei Riegel 460, eine Exzenterbaugruppe 470, und eine Klemmkupplung 480 auf.

Das erste Beschlagteil 410 und das zweite Beschlagteil 420 sind um eine zentrale Drehachse A zueinander drehbar. Das erste Beschlagteil 410 und das zweite Beschlagteil 420 sind radial zueinander drehbar mittels eines in den Figuren nicht dargestellten Umklammerungsrings gelagert.

Sofern nicht abweichend beschrieben, beziehen sich die Begriffe radial, axial und in Umfangsrichtung auf die zentrale Drehachse A des Einstellbeschlags 400. Radial bedeutet senkrecht zur zentralen Drehachse A. Axial bedeutet in Richtung oder parallel zur zentralen Drehachse A.

Das erste Beschlagteil 410 weist genau eine Innenverzahnung 412 auf. Die Innenverzahnung 412 bildet ein Hohlrad des Planetengetriebes und ist zudem ein Bestandteil der Rastverriegelung.

Das zweite Beschlagteil 420 wirkt sowohl als ein Steg des Planetengetriebes als auch als ein Führungsbauteil der Rastverriegelung. Zur Führung der Riegel 460 radialer Richtung weist das zweite Beschlagteil 420 drei gleichmäßig über den Umfang verteilt angeordnete Führungssegmente 422 auf. Jeweils ein Riegel 360 ist in jeweils eine Führung 424 geführt.

Die drei Zahnräder 430 wirken als Planetenräder des Planetengetriebes und sind jeweils auf einem von insgesamt drei Lagerzapfen 426 des als Steg wirkenden zweiten Beschlagteils 420 drehbar gelagert und mit der Innenverzahnung 412 permanent in Zahneingriff. Die Lagerzapfen 426 des zweiten Beschlagteils 420 sind vorliegend um 120 Grad zueinander um die zentrale Drehachse A verteilt angeordnet.

Das zu den beiden Beschlagteilen 410, 420 um die zentrale Drehachse A drehbar gelagerte Sonnenrad 440 weist eine Außenverzahnung 442 und eine Innenverzahnung 444 auf. Die Außenverzahnung 442 des Sonnenrads 340 ist mit den Zahnrädern 430 in Zahneingriff. Das sich drehende Sonnenrad 440 treibt somit über die Zahnräder 430 das zweite Beschlagteil 420 an. Das als Hohlrad ausgebildete erste Beschlagteil 410, das als Steg ausgebildete zweite Beschlagteil 420, die als Planeten wirkenden Zahnräder 430 und das Sonnenrad 440 bilden das Planetengetriebe.

Das Sonnenrad 440 ist über die Getriebestufe 450 antreibbar, wobei das Sonnenrad 440 selbst Bestandteil der Getriebestufe 350 ist. Die Getriebestufe 350 ist mittels einer in den Figuren 13 bis 17 nicht dargestellten Antriebswelle antreibbar, die um die zentrale Drehachse A drehend antreibbar ist, aber nicht zur Baugruppe des Einstellbeschlags 400 gehören muss.

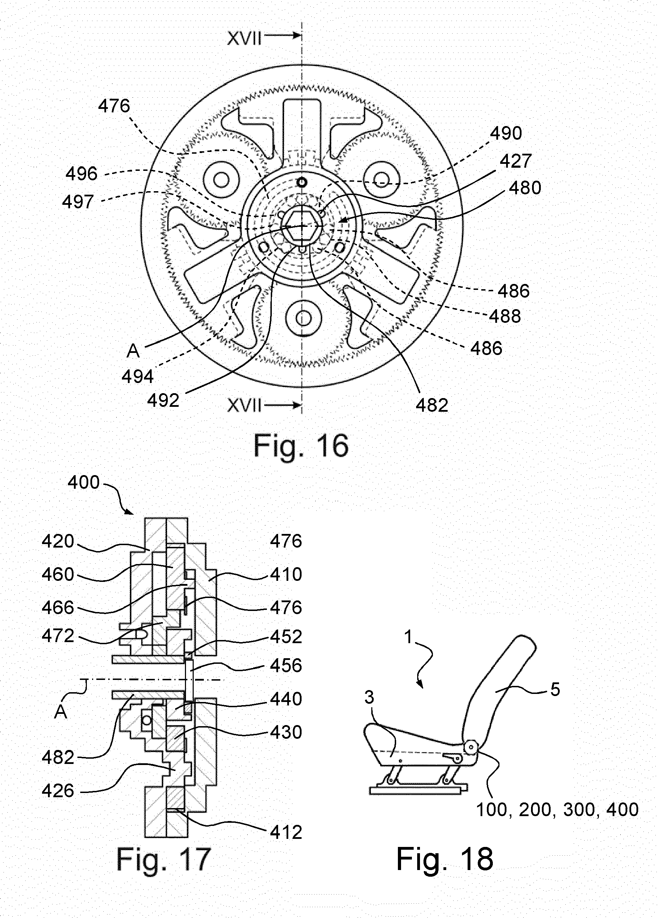

Die Getriebestufe 450 weist ein exzentrisch zur zentralen Drehachse A gelagertes Stirnzahnrad 452 mit einer mittigen kreisrunden Öffnung 454 auf. Eine Zähnezahl des Stirnzahnrads 452 ist um wenigstens einen Zahn kleiner als eine Zähnezahl der Innenverzahnung 444 des Sonnenrads 440. Das Stirnzahnrad 452 ist mit der Innenverzahnung 444 des Sonnenrads 340 in Zahneingriff. In der Öffnung 454 des Stirnzahnrads 452 ist eine nur in Fig. 17 schematisch dargestellte Exzenterwelle 456 angeordnet, die von der Antriebswelle mit einer Exzentrizität um die zentralen Drehachse A taumelnd antreibbar ist. Dazu ist die Exzenterwelle 456 exzentrisch zu der zentralen Drehachse A gelagert.

In einer Mittelstellung der Antriebsbuchse 482, in der die Rastverriegelung verriegelt ist, ist die Antriebsbuchse 482 in beide Drehrichtungen zunächst im Bereich jeweils eines Leerwinkels begrenzt drehbar, bevor die Antriebsbuchse 482 die Exzenterwelle 456 dreht. In beiden Drehrichtungen ist die Exzenterwelle 456 nach Durchlaufen des jeweiligen Leerwinkels aus der Mittelstellung der Antriebsbuchse 482 heraus auf Mitnahme mit der Antriebsbuchse 482 gekoppelt. Zur Erzeugung des Leerwinkels greift ein Mitnehmerzapfen der Antriebsbuchse 382 mit einem den Leerwinkeln entsprechenden Spiel in eine Nut 458 der Exzenterwelle 456.

Die Antriebsbuchse 482 ist vorliegend drehfest mit der Antriebswelle verbindbar, insbesondere über eine Steckverzahnung. Die sich um die zentralen Drehachse A drehende Antriebsbuchse 482 bewirkt nach Durchlaufen des Leerwinkels über die um die zentralen Drehachse A taumelnde Exzenterwelle 456 einen Antrieb des Sonnenrads 440 mit einer dem Zähnezahlverhältnis des Taumelgetriebes entsprechenden Untersetzung.

Die Riegel 460 sind jeweils in radialer Richtung in der jeweils zugeordneten Führung 424 beweglich geführt. Die Riegel 460 tragen radial außen jeweils eine Verzahnung 462, die mit der Innenverzahnung 412 des ersten Beschlagteils 410 in Zahneingriff bringbar ist. Dazu können die Riegel 460 mittels der Exzenterbaugruppe 470 in die Innenverzahnung 412 eingesteuert werden und aus der Innenverzahnung 412 ausgesteuert werden. Wenn die in dem zweiten Beschlagteil 420 geführten Riegel 460 in Zahneingriff mit der Innenverzahnung 412 des ersten Beschlagteils 410 sind, sind das erste Beschlagteil 310 und das zweite Beschlagteil 320 miteinander verriegelt.

Die Exzenterbaugruppe 470 umfasst einen Exzenter 472 mit radial abstehenden Exzenternocken 474 und eine drehfest mit dem Exzenter 472 verbundene Steuerscheibe 476. Zur drehfesten Verbindung greifen axial abstehende Nasen 475 der Steuerscheibe 476 zwischen die Exzenternocken 474.

Die Steuerscheibe weist drei Steuerkulissen 478 zur gezielten Bewegung der Riegel 460 auf. Die Riegel 460 weisen jeweils eine Steuernase 466 auf, die in jeweils eine Steuerkulisse 478 der Steuerscheibe 476 eingreift.

Die Riegel 460 weisen radial innen komplementär zu den Exzenternocken 474 ausgebildete Nocken 464 auf, die von den Exzenternocken 474 abstützbar sind. In einer Mittellage des Exzenters 472 stützen die Exzenternocken 474 die Riegel 460 derart radial ab, dass die Verzahnung 462 der Riegel 460 in Eingriff mit der Innenverzahnung 412 gehalten ist. Ist der Exzenter 472 außerhalb seiner Mittellage, sind die Nocken 464 nicht durch die Exzenternocken 474 abgestützt.

Durch Drehung der Exzenterbaugruppe 470 um die zentrale Drehachse A dreht der Exzenter 472 aus seiner Mittellage heraus, wodurch die Exzenternocken 474 unter den Nocken 464 der Riegel 460 wegdrehen, so dass die Riegel 460 radial nach innen aus der Innenverzahnung 412 bewegbar sind. Die Steuernasen 466 der Riegel 460 werden dazu mittels der Steuerkulissen 478 entsprechend nach radial innen gezogen. Durch Drehung der Antriebsbuchse 482 kann nun mittels des Planetengetriebes das erste Beschlagteil 410 relativ zu dem zweiten Beschlagteil 420 gedreht werden.

Die Exzenterbaugruppe 470 ist mittels einer Feder 479 aus beiden Drehrichtungen in eine Mittelstellung der Exzenterbaugruppe 470 vorgespannt. Durch Abschalten des Antriebs der Antriebsbuchse 482 erfolgt mittels der Feder 479 ein Zurückdrehen des Exzenters 472 in die Mittelstellung der Exzenterbaugruppe 470. Dadurch geben die Steuerkulissen 478 eine Bewegung der Steuernasen 466 der Riegel 460 nach radial außen frei. Zudem bewegen die Exzenternocken 474 die Riegel 460 nach radial außen in Zahneingriff mit der Innenverzahnung 412 des ersten Beschlagteils 410. Die nun vorliegende Drehwinkelstellung der Antriebsbuchse 482 ist deren neue Mittelstellung für den nächsten Einstellvorgang des Einstellbeschlags 400.

Die Klemmkupplung 480 bewirkt, dass bei einer Drehung der Antriebsbuchse 482 zunächst die Exzenterbaugruppe 470 gedreht wird, wodurch die Riegel 460 radial nach innen aus dem Zahneingriff mit der zweiten Innenverzahnung 414 gezogen werden, so dass die Beschlagteile 410, 420 nicht mehr miteinander verriegelt sind. Bei weiterer Drehung der Antriebsbuchse 482 dreht nach einem Durchlaufen des Leerwinkels zwischen der Antriebsbuchse 482 und der Exzenterwelle 456 der Mitnehmerzapfen die Exzenterwelle 456 und treibt die Getriebestufe 450 und somit das Sonnenrad 440 an.

Die Klemmkupplung 480 weist sechs als Klemmrollen 486 ausgeführte Klemmkörper und drei als Gummifedern 488 ausgeführt Kraftspeicher auf, die in einem Ringkanal 490 angeordnet sind. Eine radial innere Ringkanalwand 492 ist durch eine Außenumfangsfläche der Antriebsbuchse 482 begrenzt. Die radial innere Ringkanalwand 492 ist kreiszylindrisch. Eine radial äußere Ringkanalwand 494 ist durch eine Öffnung in dem Exzenter 472 gebildet. Die radial äußere Ringkanalwand 494 hat drei kreiszylindrische Abschnitte, zwischen denen in Umfangsrichtung jeweils einer von insgesamt drei Klemmwulsten 496 angeordnet sind. Die Klemmwulste 496 weisen in Richtung der radial inneren Ringkanalwand 492 und weisen in Umfangsrichtung betrachtet jeweils beidseitig eine schrägen Anlauffläche 497 für jeweils eine der Klemmrollen 486 auf.

Der Ringkanal 490 weist im Bereich der kreiszylindrischen Abschnitte der radial äußeren Ringkanalwand 490 in radialer Richtung eine Breite auf, die geringfügig größer ist als ein Durchmesser der Klemmrollen 486. Im Bereich der Anlaufflächen 497 weist der Ringkanal 490 in radialer Richtung eine Breite auf, die kleiner ist als ein Durchmesser der Klemmrollen 486.

Jeweils zwei Klemmrollen 486 bilden ein Klemmrollenpaar und sind zwischen zwei Anlaufschrägen 497 benachbarter Klemmwulste 496 angeordnet. Die Klemmkupplung 480 weist drei gleichwirkende Klemmrollenpaare auf, von denen nachfolgend nur ein Klemmrollenpaar beschrieben ist.

Zwischen den beiden Klemmrollen 486 des Klemmrollenpaars ist jeweils eine der Gummifedern 488 angeordnet. Die Gummifedern 488 spanen in einem unbetätigten Zustand des Einstellbeschlags 400 die beiden Klemmrollen 486 voneinander weg gegen eine zugeordnete Anlaufschräge 497. Je nach Drehrichtung der Antriebsbuchse 482 wird eine der beiden Klemmrollen 486 zwischen eine Anlaufschräge 497 und die radial inneren Ringkanalwand 492 geklemmt. Dadurch bewirkt eine Drehbewegung der Antriebsbuchse 482 zunächst eine Drehung der Exzenterbaugruppe 472, so dass die Riegel 460 radial nach innen in eine entriegelte Position gezogen werden.

Das zweite Beschlagteil 420 weist drei Entsperrnocken 427 auf, von denen jeweils ein Entsperrnocken 427 zwischen zwei Klemmrollen 486 benachbarter Klemmrollen greift. In einem unbetätigten Zustand des Einstellbeschlags 400 ist jeweils ein Entsperrnocken 427 mittig zwischen den beiden Klemmrollen 486 angeordnet. Die Entsperrnocken 427 haben beidseitig jeweils einen Abstand zu den Klemmrollen 486.

Bei einer Drehbewegung der Antriebsbuchse 482 dreht die Exzenterbaugruppe 472 solange mit, bis die Klemmrollen 486 an die Entsperrnocken 427 des zweiten Beschlagteils 420 anlaufen. Durch das Anlaufen der Klemmrollen 486 an die Entsperrnocken 427 werden die Klemmrollen 486 unter weiterer Vorspannung der Gummifedern 488 von den zugeordneten Anlaufschrägen 497 gedrückt, wodurch die Mitnahme der Exzenterbaugruppe 472 unterbrochen ist.

Im weiteren Verlauf der Drehbewegung der Antriebsbuchse 482 gelangt nun der Mitnehmerzapfen der sich drehenden Antriebsbuchse 482 in Anlage an eine die Nut der Exzenterwelle 456 begrenzende Wand, wodurch die Exzenterwelle 456 mitgedreht wird und das Planetengetriebe antreibt. Sobald die Drehbewegung der Antriebsbuchse 482 beendet ist, dreht die Feder 479 die Exzenterbaugruppe 470 wieder in deren Mittelstellung, so dass der Einstellbeschlag 400 erneut verriegelt.

Figur 18 zeigt einen erfindungsgemäßen Fahrzeugsitz 1 für ein Kraftfahrzeug. Der Fahrzeugsitz 1 weist ein Sitzteil 3 und eine relativ zum Sitzteil 3 in ihrer Neigung einstellbare Rückenlehne 5 auf. Zur Neigungseinstellung der Rückenlehne 5 wird eine Übertragungstange gedreht, beispielsweise manuell mittels eines Handrades oder motorisch, beispielsweise mittels eines Elektromotors. Die Übertragungstange ist horizontal im Übergangsbereich zwischen dem Sitzteil 3 und der Rückenlehne 5 angeordnet. Auf beiden Seiten des Fahrzeugsitzes 1 greift die Übertragungstange drehfest in jeweils einen erfindungsgemäßen Einstellbeschlag 100, 200, 300, 400.

Die in der vorstehenden Beschreibung, den Ansprüchen und den Figuren offenbarten Merkmale können sowohl einzeln als auch in Kombination für die Verwirklichung der Erfindung in ihren verschiedenen Ausgestaltungen von Bedeutung sein, soweit sie im Schutzbereich der Ansprüche bleiben.

In den Ansprüchen verwendete Begriffe wie "umfassen", "aufweisen", "beinhalten", "enthalten" und dergleichen schließen weitere Elemente oder Schritte nicht aus. Die Verwendung des unbestimmten Artikels schließt eine Mehrzahl nicht aus. Eine einzelne Einrichtung kann die Funktionen mehrerer in den Ansprüchen genannten Einheiten bzw. Einrichtungen ausführen.

### Bezugszeichenliste

- 1: Fahrzeugsitz
- 3: Sitzunterbau
- 5: Rückenlehne
- 100: Einstellbeschlag
- 110: erstes Beschlagteil
- 112: erste Innenverzahnung
- 114: zweite Innenverzahnung
- 120: zweites Beschlagteil
- 122: Führung
- 130: Zahnrad, Planet
- 140: Riegel
- 150: Exzenter
- 200: Einstellbeschlag
- 220: Getriebebeschlag
- 230: Sonnenrad
- 240: Rastverriegelung
- 250: Exzenter
- 252: Riegel
- 260: Logikelement
- 262: Klemmrollenfreilauf
- 264: Feder
- 266: Zylinderrolle
- 267: Druckfeder
- 268: Ansteuerstege
- 270: Ausgangswelle (eines Getriebemotors)
- 300: Einstellbeschlag
- 310: erstes Beschlagteil
- 312: erste Innenverzahnung
- 314: zweite Innenverzahnung
- 320: zweites Beschlagteil
- 322: Führungssegment
- 324: Führung
- 326: Lagerzapfen
- 327: Entsperrnocken
- 328: Schließblech
- 330: Zahnrad (Planetenrad)
- 340: Sonnenrad
- 342: Außenverzahnung
- 344: Innenverzahnung
- 350: Getriebestufe
- 352: Stirnzahnrad
- 354: Öffnung
- 356: Exzenterwelle
- 358: Nut
- 360: Riegel
- 362: Verzahnung
- 364: Nocken
- 366: Steuernase
- 370: Exzenterbaugruppe
- 372: Exzenter
- 374: Exzenternocken
- 376: Steuerscheibe
- 378: Steuerkulisse
- 379: Feder
- 380: Klemmkupplung
- 382: Antriebsbuchse
- 384: Mitnehmerzapfen
- 386: Klemmrolle
- 388: Gummifeder
- 390: Ringkanal
- 392: innere Ringkanalwand
- 394: äußere Ringkanalwand
- 396: Klemmwulst
- 397: Anlauffläche
- 400: Einstellbeschlag
- 410: erstes Beschlagteil
- 412: Innenverzahnung
- 420: zweites Beschlagteil
- 422: Führungssegment
- 424: Führung
- 426: Lagerzapfen
- 427: Entsperrnocken
- 430: Zahnrad (Planetenrad)
- 440: Sonnenrad
- 442: Außenverzahnung
- 444: Innenverzahnung
- 450: Getriebestufe
- 452: Stirnzahnrad
- 454: Öffnung
- 456: Exzenterwelle
- 460: Riegel
- 462: Verzahnung
- 464: Nocken
- 466: Steuernase
- 470: Exzenterbaugruppe
- 472: Exzenter
- 474: Exzenternocken
- 475: Nase
- 476: Steuerscheibe
- 478: Steuerkulisse
- 479: Feder
- 480: Klemmkupplung
- 482: Antriebsbuchse
- 486: Klemmrolle
- 488: Gummifeder
- 490: Ringkanal
- 492: innere Ringkanalwand
- 494: äußere Ringkanalwand
- 496: Klemmwulst
- 497: Anlauffläche
- D: zentrale Drehachse A
- W: Antriebswelle

## Patentansprüche

1. Einstellbeschlag (100; 200; 300; 400) für einen Fahrzeugsitz (1), insbesondere zum Einstellen einer Neigung einer Rückenlehne (5) des Fahrzeugsitzes (1), aufweisend ein erstes Beschlagteil (110; 210; 310; 410), insbesondere verbindbar mit einem Sitzunterbau (3) des Fahrzeugsitzes (1), und ein um eine zentrale Drehachse (A) relativ zum ersten Beschlagteil (110; 210; 310; 410) schwenkbares zweites Beschlagteil (120; 220; 320; 420), insbesondere verbindbar mit der Rückenlehne (5) des Fahrzeugsitzes (1),
**dadurch gekennzeichnet, dass**
das erste Beschlagteil (110; 210; 310; 410) und das zweite Beschlagteil (120; 220; 320; 420) sowohl Bestandteile einer Getriebeeinheit des Einstellbeschlags (100; 200; 300; 400) als auch einer Verriegelungsvorrichtung des Einstellbeschlags (100; 200; 300; 400) sind, wobei die Getriebeeinheit ein Planetengetriebe aufweist oder ein Planetengetriebe ist und das erste Beschlagteil (110; 210; 310; 410) als ein Hohlrad des Planetengetriebes wirkt, und das zweite Beschlagteil (120; 220; 320; 420) als ein Steg des Planetengetriebes wirkt.

2. Einstellbeschlag (100; 200; 300; 400) nach Anspruch 1, **dadurch gekennzeichnet, dass** die Verriegelungsvorrichtung eine Rastverriegelung aufweist oder eine Rastverriegelung ist.

3. Einstellbeschlag (100; 200; 300; 400) nach einem der Ansprüche 1 oder 2, **dadurch gekennzeichnet, dass** das erste Beschlagteil (110; 210; 310; 410) eine Innenverzahnung (112, 312, 412) der Getriebeeinheit aufweist.

4. Einstellbeschlag (100; 200; 300; 400) nach einem der Ansprüche 1 bis 3, **dadurch gekennzeichnet, dass** das erste Beschlagteil (110; 210; 310; 410) eine Innenverzahnung (114, 314, 412) der Verriegelungsvorrichtung aufweist.

5. Einstellbeschlag (100; 200; 300) nach Anspruch 3 und 4, **dadurch gekennzeichnet, dass** die Innenverzahnung (112, 312) der Getriebeeinheit axial neben der Innenverzahnung (114; 314) der Verriegelungsvorrichtung angeordnet ist.

6. Einstellbeschlag (400) nach Anspruch 3 und 4, **dadurch gekennzeichnet, dass** die Innenverzahnung (412) der Getriebeeinheit identisch mit der Innenverzahnung (412) der Verriegelungsvorrichtung ist.

7. Einstellbeschlag (100; 200; 300; 400) nach einem der Ansprüche 2 bis 6, **dadurch gekennzeichnet, dass** das zweite Beschlagteil (120; 220; 320; 420) wenigstens eine Führung (122; 324; 424) für wenigstens einen Riegel (140; 252; 360; 460) der Rastverriegelung aufweist.

8. Einstellbeschlag (100; 200; 300; 400) nach einem der Ansprüche 2 bis 7, **dadurch gekennzeichnet, dass** der wenigstens eine Riegel (140; 252; 360; 460) mittels einer Drehung einer Exzenterbaugruppe (150; 250; 370, 470) aus einer Mittelstellung der Exzenterbaugruppe (370, 470) heraus in eine den Einstellbeschlag (100; 200; 300; 400) entriegelnde Position bewegbar ist, und mittels einer gegenläufigen Drehung zurück in die Mittelstellung der Exzenterbaugruppe (370, 470) in eine den Einstellbeschlag (100; 200; 300; 400) verriegelnde Position bewegbar ist.

9. Einstellbeschlag (100; 200; 300; 400) nach Anspruch 8, aufweisend eine Schnittstelle, insbesondere eine Antriebsbuchse (382, 482) zur Verbindung des Einstellbeschlags (100; 200; 300; 400) mit einem Antrieb, insbesondere mit einer Antriebswelle (W).

10. Einstellbeschlag (300; 400) nach Anspruch 8 und 9, **dadurch gekennzeichnet, dass** eine Drehung einer Antriebsbuchse (382, 482) aus einer Mittelstellung dieser Antriebsbuchse (382, 482) hinaus mittels einer Klemmkupplung (380, 480) eine Drehung der Exzenterbaugruppe (370, 470) bewirkt, und nach Drehung der Antriebsbuchse (382, 482) über einen definierten Winkel hinaus die Klemmkupplung (380, 480) öffnet, so dass die Antriebsbuchse (382, 482) weiterdrehen kann, ohne dabei die Exzenterbaugruppe (370, 470) zu drehen.

11. Einstellbeschlag (300; 400) nach Anspruch 10, **dadurch gekennzeichnet, dass** ein Sonnenrad (340; 440) der Getriebestufe mit einem Leerwinkel derart an die Antriebsbuchse (382, 482) gekoppelt ist, dass bei einer Drehung der Antriebsbuchse (382, 482) aus deren Mittelstellung hinaus bis zu einem definierten Drehwinkel der Antriebsbuchse (382, 482) das Sonnenrad (340; 440) unbewegt bleibt, und bei einer Drehung der Antriebsbuchse (382, 482) über den definierten Winkel hinaus das Sonnenrad (340; 440) mitdreht.

12. Einstellbeschlag (300; 400) nach Anspruch 11, **dadurch gekennzeichnet, dass** zwischen der Antriebsbuchse (382, 482) und dem Sonnenrad (340; 440) eine Getriebestufe (350; 450), insbesondere ein Taumelgetriebe, angeordnet ist.

13. Fahrzeugsitz (1) mit einem Einstellbeschlag (100; 200; 300; 400) nach einem der Ansprüche 1 bis 12.

## Claims

1. Adjustment fitting (100; 200; 300; 400) for a vehicle seat (1), in particular for adjusting an inclination of a backrest (5) of the vehicle seat (1), comprising a first fitting part (110; 210; 310; 410), in particular connectable to a seat substructure (3) of the vehicle seat (1), and a second fitting part (120; 220; 320; 420) which is pivotable about a central axis of rotation (A) relative to the first fitting part (110; 210; 310; 410) and is in particular connectable to the backrest (5) of the vehicle seat (1), **characterized in that**
the first fitting part (110; 210; 310; 410) and the second fitting part (120; 220; 320; 420) are components both of a gear unit of the adjustment fitting (100; 200; 300; 400) and of a locking device of the adjustment fitting (100; 200; 300; 400), wherein the gear unit has a planetary gear system or is a planetary gear system, and the first fitting part (110; 210; 310; 410) acts as a ring gear of the planetary gear system, and the second fitting part (120; 220; 320; 420) acts as a web of the planetary gear system.

2. Adjustment fitting (100; 200; 300; 400) according to Claim 1, **characterized in that** the locking device has a detent lock or is a detent lock.

3. Adjustment fitting (100; 200; 300; 400) according to either of Claims 1 and 2, **characterized in that** the first fitting part (110; 210; 310; 410) has an inner toothing (112, 312, 412) of the gear unit.

4. Adjustment fitting (100; 200; 300; 400) according to one of Claims 1 to 3, **characterized in that** the first fitting part (110; 210; 310; 410) has an inner toothing (114, 314, 412) of the locking device.

5. Adjustment fitting (100; 200; 300) according to Claims 3 and 4, **characterized in that** the inner toothing (112, 312) of the gear unit is arranged axially adjacent to the inner toothing (114; 314) of the locking device.

6. Adjustment fitting (400) according to Claims 3 and 4, **characterized in that** the inner toothing (412) of the gear unit is identical to the inner toothing (412) of the locking device.

7. Adjustment fitting (100; 200; 300; 400) according to one of Claims 2 to 6, **characterized in that** the second fitting part (120; 220; 320; 420) has at least one guide (122; 324; 424) for at least one locking element (140; 252; 360; 460) of the detent lock.

8. Adjustment fitting (100; 200; 300; 400) according to one of Claims 2 to 7, **characterized in that** the at least one locking element (140; 252; 360; 460) is movable by means of a rotation of an eccentric subassembly (150; 250; 370, 470) from a central position of the eccentric subassembly (370, 470) into a position unlocking the adjustment fitting (100; 200; 300; 400), and is movable into a position locking the adjustment fitting (100; 200; 300; 400) by means of an opposing rotation back into the central position of the eccentric subassembly (370, 470) .

9. Adjustment fitting (100; 200; 300; 400) according to Claim 8, having an interface, in particular a drive socket (382, 482), for connecting the adjustment fitting (100; 200; 300; 400) to a drive, in particular to a drive shaft (W).

10. Adjustment fitting (300; 400) according to Claims 8 and 9, **characterized in that** a rotation of a drive socket (382, 482) from a central position of this drive socket (382, 482) by means of a clamping coupling (380, 480) effects a rotation of the eccentric subassembly (370, 470), and after rotating the drive socket (382, 482) beyond a defined angle the clamping coupling (380, 480) opens such that the drive socket (382, 482) may rotate further without rotating the eccentric subassembly (370, 470) at the same time.

11. Adjustment fitting (300; 400) according to Claim 10, **characterized in that** a sun gear (340; 440) of the gear stage is coupled with an empty angle to the drive socket (382, 482), such that with a rotation of the drive socket (382, 482) from the central position thereof to a defined rotational angle of the drive socket (382, 482) the sun gear (340; 440) remains immobile, and with a rotation of the drive socket (382, 482) beyond the defined angle the sun gear (340; 440) rotates therewith.

12. Adjustment fitting (300; 400) according to Claim 11, **characterized in that** a gear stage (350; 450), in particular a wobble gear, is arranged between the drive socket (382, 482) and the sun gear (340; 440).

13. Vehicle seat (1) comprising an adjustment fitting (100; 200; 300; 400) according to one of Claims 1 to 12.

## Revendications

1. Ferrure de réglage (100 ; 200 ; 300 ; 400) pour un siège de véhicule (1), en particulier pour régler une inclinaison d'un dossier (5) du siège de véhicule (1), présentant une première pièce de ferrure (110 ; 210 ; 310 ; 410), en particulier apte à être reliée à une base de siège (3) du siège de véhicule (1), et une deuxième pièce de ferrure (120 ; 220 ; 320 ; 420) apte à pivoter autour d'un axe de rotation central (A) par rapport à la première pièce de ferrure (110 ; 210 ; 310 ; 410), en particulier apte à être reliée au dossier (5) du siège de véhicule (1),
**caractérisée en ce que**
la première pièce de ferrure (110 ; 210 ; 310 ; 410) et la deuxième pièce de ferrure (120 ; 220 ; 320 ; 420) sont à la fois des composants d'une unité d'engrenage de la ferrure de réglage (100 ; 200 ; 300 ; 400) et d'un dispositif de verrouillage de la ferrure de réglage (100 ; 200 ; 300 ; 400), l'unité d'engrenage présentant un engrenage planétaire ou étant un engrenage planétaire et la première pièce de ferrure (110 ; 210 ; 310 ; 410) agissant comme une couronne de l'engrenage planétaire, et la deuxième pièce de ferrure (120 ; 220 ; 320 ; 420) agissant comme une barrette de l'engrenage planétaire.

2. Ferrure de réglage (100 ; 200 ; 300 ; 400) selon la revendication 1, **caractérisée en ce que** le dispositif de verrouillage présente un dispositif de verrouillage à crans ou est un dispositif de verrouillage à crans.

3. Ferrure de réglage (100 ; 200 ; 300 ; 400) selon l'une des revendications 1 ou 2, **caractérisée en ce que** la première pièce de ferrure (110 ; 210 ; 310 ; 410) présente une denture intérieure (112, 312, 412) de l'unité d'engrenage.

4. Ferrure de réglage (100 ; 200 ; 300 ; 400) selon l'une des revendications 1 à 3, **caractérisée en ce que** la première pièce de ferrure (110 ; 210 ; 310 ; 410) présente une denture intérieure (114, 314, 412) du dispositif de verrouillage.

5. Ferrure de réglage (100 ; 200 ; 300) selon les revendications 3 et 4, **caractérisée en ce que** la denture intérieure (112, 312) de l'unité d'engrenage est agencée axialement à côté de la denture intérieure (114 ; 314) du dispositif de verrouillage.

6. Ferrure de réglage (400) selon les revendications 3 et 4, **caractérisée en ce que** la denture intérieure (412) de l'unité d'engrenage est identique à la denture intérieure (412) du dispositif de verrouillage.

7. Ferrure de réglage (100 ; 200 ; 300 ; 400) selon l'une des revendications 2 à 6, **caractérisée en ce que** la deuxième pièce de ferrure (120 ; 220 ; 320 ; 420) comporte au moins un guide (122 ; 324 ; 424) pour au moins un pêne (140 ; 252 ; 360 ; 460) du dispositif de verrouillage à crans.

8. Ferrure de réglage (100 ; 200 ; 300 ; 400) selon l'une des revendications 2 à 7, **caractérisée en ce que** l'au moins un verrou (140 ; 252 ; 360 ; 460), au moyen d'une rotation d'un ensemble excentrique (150 ; 250 ; 370, 470), est déplaçable d'une position médiane de l'ensemble excentrique (370, 470) vers une position de verrouillage de la ferrure de réglage (100 ; 200 ; 300 ; 400) et, au moyen d'une rotation en sens inverse, est apte à être ramené dans la position médiane de l'ensemble excentrique (370, 470) dans une position de verrouillage de la ferrure de réglage (100 ; 200 ; 300 ; 400).

9. Ferrure de réglage (100 ; 200 ; 300 ; 400) selon la revendication 8, présentant une interface, notamment une douille d'entraînement (382, 482) pour relier la ferrure de réglage (100 ; 200 ; 300 ; 400) à un entraînement, notamment à un arbre d'entraînement (W).

10. Ferrure de réglage (300 ; 400) selon les revendications 8 et 9, **caractérisée en ce qu'**une rotation d'une douille d'entraînement (382, 482) à partir d'une position médiane de cette douille d'entraînement (382, 482) au moyen d'un accouplement de serrage (380, 480) entraîne une rotation de l'ensemble excentrique (370, 470) et, après rotation de la douille d'entraînement (382, 482) au-delà d'un angle défini, l'accouplement de serrage (380, 480) s'ouvre, de sorte que la douille d'entraînement (382, 482) est apte à continuer à tourner sans pour autant faire tourner l'ensemble excentrique (370, 470).

11. Ferrure de réglage (300 ; 400) selon la revendication 10, **caractérisée en ce qu'**une roue solaire (340 ; 440) de l'étage d'engrenage est reliée à la douille d'entraînement (382, 482) avec un angle libre de telle sorte que, lors d'une rotation de la douille d'entraînement (382, 482) depuis sa position médiane jusqu'à un angle de rotation défini de la douille d'entraînement (382, 482), la roue solaire (340 ; 440) reste immobile, et lorsque la douille d'entraînement (382, 482) tourne au-delà de l'angle défini, la roue solaire (340 ; 440) tourne également.

12. Ferrure de réglage (300 ; 400) selon la revendication 11, **caractérisée en ce qu'**un étage d'engrenage (350 ; 450), en particulier un engrenage oscillant, est agencé entre la douille d'entraînement (382, 482) et la roue solaire (340 ; 440).

13. Siège de véhicule (1) avec une ferrure de réglage (100 ; 200 ; 300 ; 400) selon l'une des revendications 1 à 12.
